# EUROPÄISCHE PATENTSCHRIFT

(11) **EP 4 444 644 B1**
(45) Veröffentlichungstag und Bekanntmachung des Hinweises auf die Patenterteilung: **04.11.2026**
(21) Anmeldenummer: 22821424.3
(22) Anmeldetag: 22.11.2022
(51) Int. Cl.: B66B 1/24, B66B 5/00

(54) **VERFAHREN ZUM STEUERN EINER FLUGFÄHIGEN DROHNE IN EINEM AUFZUGSCHACHT EINER AUFZUGANLAGE SOWIE AUFZUGANLAGENINSPEKTIONSANORDNUNG**
METHOD FOR CONTROLLING A FLIGHT-CAPABLE DRONE IN A LIFT SHAFT OF A LIFT SYSTEM AND LIFT SYSTEM INSPECTION ASSEMBLY
PROCÉDÉ DE COMMANDE D'UN DRONE VOLANT DANS UNE CAGE D'ASCENSEUR D'UNE INSTALLATION D'ASCENSEUR, AINSI QU'AGENCEMENT D'INSPECTION DE L'INSTALLATION D'ASCENSEUR

(30) Priorität: 07.12.2021 EP 21212685
(43) Veröffentlichungstag der Anmeldung: 16.10.2024
(73) Patentinhaber: INVENTIO AG, 6052 Hergiswil (CH)
(72) Erfinder: BITZI, Raphael, 6005 Luzern (CH); CHIAPPA, Alberto, 1025 Saint-Sulpice (CH); KUSSEROW, Martin, 6005 Luzern (CH); WÄLTI, Lucas, 1006 Lausanne (CH)
(74) Vertreter: Inventio AG
(86) Internationale Anmeldenummer: PCT/EP2022/082686
(87) Internationale Veröffentlichungsnummer: WO 2023/104494

(56) Entgegenhaltungen:
- WO-A1-2018/066051
- WO-A1-2019/121859
- JP-A- 2018 203 486
- JP-A- 2019 043 755
- US-A1- 2020 072 613

## Beschreibung

Die vorliegende Erfindung betrifft ein Verfahren zum Steuern einer flugfähigen Drohne in einem Aufzugschacht einer Aufzuganlage. Ferner betrifft die Erfindung eine Aufzuganlageninspektionsanordnung, bei der mithilfe einer flugfähigen Drohne ein Aufzugschacht inspiziert werden kann.

Aufzuganlagen verfügen im Allgemeinen über zumindest einen länglichen Aufzugschacht, in dem sich eine verlagerbare Komponente wie zum Beispiel eine Aufzugkabine oder ein Gegengewicht entlang einer Längsrichtung des Aufzugschachts bewegen lassen. Die Längsrichtung verläuft dabei meist vertikal, sodass sich die Aufzugkabine bzw. das Gegengewicht zwischen verschiedenen Stockwerken eines Bauwerks verlagern lässt. Aufzugschächte können sich hierbei über erhebliche Höhen erstrecken.

Beim Bau einer Aufzuganlage oder während Wartungen der Aufzuganlage kann es erforderlich sein, den Aufzugschacht zu inspizieren. Herkömmlich musste sich hierzu ein Techniker entlang des gesamten Aufzugschachts bewegen, um beispielsweise Aufzugkomponenten, Halterungen, Verankerungen, etc. an verschiedenen Höhen des Aufzugschachts visuell prüfen zu können. Der Techniker konnte hierbei beispielsweise auf einem Dach der Aufzugkabine stehend mit der Aufzugkabine entlang des Aufzugschachts bewegt werden. Allerdings erforderte dieses Vorgehen unter anderem einen erheblichen Arbeitsaufwand durch den Techniker. Ausserdem ist dieses Vorgehen mit nicht unerheblichen Gefahren für den Techniker verbunden.

Es wurden Ansätze entwickelt, den Aufzugschacht einer Aufzuganlage mithilfe einer flugfähigen Drohne zu inspizieren. Beispielsweise wird in der WO 2017 207 597 A1 ein Ansatz zum ferngesteuerten Überwachen und Inspizieren eines Aufzuges beschrieben. Dabei wird ein autonom flugfähiges Objekt mit zumindest einem Sensor zu der Aufzuganlage geschickt und kann sich dort dann entlang des Aufzugschachts bewegen.

Dabei können mittels des Sensors Daten gesammelt werden, die dann beispielsweise zu einem entfernten Aufzugkontrollzentrum geschickt werden können, um die Aufzuganlage aus der Ferne überwachen bzw. inspizieren zu können.

Allerdings wurde beobachtet, dass es beim Bewegen der Drohne durch den Aufzugschacht zu Problemen kommen kann. Insbesondere wurde erkannt, dass es keine einfach zu lösende Aufgabe ist, die Drohne derart entlang des Aufzugschachts fliegen zu lassen, dass es zu keinen Kollisionen mit Komponenten der Aufzuganlage, insbesondere keinen Kollisionen mit verlagerbaren Komponenten wie der Aufzugkabine bzw. dem Gegengewicht kommt.

Die WO 2018/066051 A1 beschreibt eine Aufzugsteuerung einer Aufzuganlage, welche von einer Drohne eine Inspektionsanforderung empfangen kann und aufgrund dieser Inspektionsanforderung eine Kabine in eine bestimmte Position bringt.

Die JP 2018203486 A beschreibt ein Inspektionssystem für eine Aufzuganlage, bei welchem eine Drohne von einer Aufzugsteuerung der Aufzuganlage gesteuert wird.

Die JP 2019043755 A beschreibt ein Inspektionssystem für eine Aufzuganlage, bei welchem eine Drohne für die Inspektion eines von mehreren nebeneinander liegenden Aufzugschächten eingesetzt wird. Damit die Drohne bei der Vorbeifahrt einer Aufzugkabine in einem benachbarten Schacht nicht zu starken Seitenwinden ausgesetzt ist, wird vor einer derartigen Vorbeifahrt an die Drohne ein Befehl übermittelt, sich in eine sichere Position zu bringen.

Die US 2020/0072613 A1 beschreibt ein Verfahren zur Steuerung einer Drohne in einem Aufzugschacht, bei welchem die Drohne Informationen über die Position einer Kabine im Aufzugschacht erhält, um Kollisionen mit der Kabine zu verhindern.

Es kann ein Bedarf daran bestehen, die vorgenannten Probleme weitgehend zu vermeiden. Insbesondere kann ein Bedarf an einem Verfahren zum Steuern einer flugfähigen Drohne in einem Aufzugschacht einer Aufzuganlage bestehen, bei dem Kollisionen der Drohne mit Komponenten der Aufzuganlage in einfacher und zuverlässiger Weise vermieden werden können. Ausserdem kann ein Bedarf an einer Aufzuganlageninspektionsanordnung bestehen, welche in einfacher Weise einen Flug einer Drohne unter Vermeidung von solchen Kollisionen ermöglicht.

Einem solchen Bedarf kann durch den Gegenstand gemäss einem der unabhängigen Ansprüche entsprochen werden. Vorteilhafte Ausführungsformen sind in den abhängigen Ansprüchen und in der nachfolgenden Beschreibung sowie den zugehörigen Figuren angegeben.

Ein erster Aspekt der Erfindung betrifft ein Verfahren zum Steuern einer flugfähigen Drohne in einem Aufzugschacht einer Aufzuganlage. Das Verfahren umfasst zumindest die folgenden Verfahrensschritte, vorzugsweise in der angegebenen Reihenfolge:
(i) Empfangen einer von der Aufzuganlage bereitgestellten Aufzugschachtsegment-Information, welche angibt, welches Volumensegment des Aufzugschachts aktuell von der Aufzuganlage als für die Drohne gesperrt bestimmt wird; und
(ii) Steuern der Drohne entlang eines von der Drohne automatisiert ermittelten Flugwegs, wobei die Drohne den Flugweg derart ermittelt, dass sich die Drohne ausschliesslich ausserhalb des für die Drohne als gesperrt bestimmten Volumensegments bewegt.

Dabei ermittelt die Drohne den Flugweg unter Berücksichtigung der empfangenen Aufzugschachtsegment-Information.

Gemäss einem zweiten Aspekt der Erfindung wird eine Aufzuganlageninspektionsanordnung beschrieben, welche eine Aufzuganlage und eine flugfähige Drohne aufweist. Die Aufzuganlage umfasst einen Aufzugschacht, wenigstens eine in dem Aufzugschacht verlagerbare Komponente, einen Antrieb zum Verlagern der verlagerbaren Komponente und eine Aufzugsteuerung zum Steuern von Verlagerungsbewegungen der verlagerbaren Komponente. Dabei ist die Aufzuganlageninspektionsanordnung dazu konfiguriert, das Verfahren gemäss einer Ausführungsform des ersten Aspekts der Erfindung auszuführen oder zu kontrollieren.

Mögliche Merkmale und Vorteile von Ausführungsformen der Erfindung können im Schutzumfang der beigefügten Ansprüche unter anderem und ohne die Erfindung einzuschränken als auf nachfolgend beschriebenen Ideen und Erkenntnissen beruhend angesehen werden.

Kurz zusammengefasst und ohne die Aspekte der Erfindung zu beschränken, kann eine Idee, welche den hierin beschriebenen Erfindungsaspekten zu Grunde liegt, darin gesehen werden, dass prinzipiell zwar flugfähige Drohnen bekannt sind, die sich zu Inspektionszwecken innerhalb eines Aufzugschachts bewegen lassen, dass jedoch erkannt wurde, dass es unter den in einem Aufzugschacht herrschenden Bedingungen schwierig sein kann, die Drohne kollisionsfrei entlang des Aufzugschachts fliegen zu lassen. Insbesondere Kollisionen mit der sich rasch bewegenden Aufzugkabine oder dem Gegengewicht erscheinen für die Drohne schwierig vermeidbar zu sein. Zwar ist prinzipiell vorstellbar, die Drohne mit einer ausreichenden Sensorik auszustatten, dass eine Steuerung der Drohne die Drohne aufgrund von Sensorsignalen dieser Sensorik autonom fliegen lassen kann und dabei Kollisionen vermeiden kann. Sowohl die Sensorik als auch die Steuerung müssen in einer solchen Implementierung jedoch verhältnismässig aufwendig ausgestaltet sein, wodurch Kosten eines solchen Ansatzes erhöht werden und/oder eine Zuverlässigkeit der Drohne aufgrund ihrer Komplexität verringert sein können. Es wurde daraufhin erkannt, dass die Drohne mit deutlich einfacheren Mitteln, insbesondere mit einer einfacheren Sensorik und/oder einer einfacher ausgestalteten Steuerung einen kollisionsfreien Flug entlang des Aufzugschachts ausführen kann, wenn der Drohne von der Aufzuganlage zusätzliche Informationen zur Verfügung gestellt werden. Insbesondere kann die Drohne ihren Flugweg in einfacher Weise kollisionsfrei ermitteln, wenn von Seiten der Aufzuganlage eine Information bereitgestellt wird, die hierin als Aufzugschachtsegment-Information bezeichnet wird und die angibt, welches Volumensegment des Aufzugschachts für die Drohne gesperrt sein soll. Wenn der Drohne diese Aufzugschachtsegment-Information zur Verfügung steht, kann die Drohne in deutlich einfacherer Weise einen Flugweg ermitteln, entlang dem sie kollisionsfrei durch den Aufzugschacht bewegt werden kann.

Nachfolgend werden mögliche Ausgestaltungen der Erfindung im Einzelnen beschrieben.

Flugfähige Drohnen sind seit langem bekannt und können für verschiedene Einsatzzwecke optimiert angepasst sein. Solche Drohnen können in der Lage sein, senkrecht zu starten. Ausserdem können solche Drohnen sich sowohl vertikal als auch horizontal innerhalb eines Volumens bewegen. Die Drohnen können beispielsweise als Helikopter, insbesondere als Multikopter, mit einem bzw. mehreren Propellern ausgestattet sein. Solche Propeller können beispielsweise durch geeignetes Anstellen von Propellerblättern einen durch den drehenden Propeller erzeugten Luftstrom in verschiedene Richtungen lenken und damit einen wählbar zu richtenden Schub erzeugen. Sofern mehrere Propeller an der Drohne vorgesehen sind, kann auch durch unterschiedliche Rotationsgeschwindigkeiten der verschiedenen Propeller eine Schubrichtung und damit eine Flugrichtung der Drohne gesteuert werden.

Prinzipiell können Drohnen von einem Menschen beispielsweise mithilfe einer drahtlosen Steuerung ferngesteuert werden. Hierzu muss der Mensch jedoch speziell geschult werden und sich ausserdem während des Drohnenfluges auf das Steuern der Drohne konzentrieren.

Es wurden daher Drohnen entwickelt, die sich zumindest in bestimmten Situationen autonom fliegend bewegen können. Solche Drohnen benötigen in der Regel eine aufwändige Sensorik mit einer Vielzahl von Sensoren an Bord der Drohne. Solche Sensoren können beispielsweise ein oder mehrere Kameras, Abstandssensoren wie Ultraschallsensoren, Radarsensoren, Lidarsensoren, etc. und/oder Mikrofone umfassen. Ausserdem benötigt die Drohne im Allgemeinen eine aufwändige Steuerung, welche in der Lage ist, die von den Sensoren gelieferten Signale ausreichend schnell und zuverlässig auszuwerten, um auf diesen basierend dann die Drohne autonom entlang eines von der Steuerung ermittelten Flugwegs fliegen zu lassen.

Es wurde erkannt, dass für eine spezifisch angestrebte Anwendung, bei der die flugfähige Drohne im Rahmen einer Inspektion entlang eines Aufzugschachts bewegt werden soll, ein Steuern der Drohne einerseits aufzugspezifischen Herausforderungen unterliegt, andererseits aber auch durch geschicktes Nutzen bereits vorhandener Informationen und Bereitstellung dieser Informationen an die Drohne erheblich vereinfacht werden kann.

Insbesondere wurde erkannt, dass ein Fliegen der Drohne innerhalb des Aufzugschachts insbesondere deshalb riskant sein kann, da sich in dem Aufzugschacht typischerweise verlagerbare Komponenten wie die Aufzugkabine und/oder das Gegengewicht mit verhältnismässig hohen Geschwindigkeiten bewegen können. Insbesondere wurde erkannt, dass die Geschwindigkeiten, mit denen sich diese Komponenten bewegen, so gross sein können, dass die Drohne die jeweilige Komponente schon in verhältnismässig grossen Abständen erkennen müsste, um angesichts ihrer eigenen Reaktionsfähigkeiten rechtzeitig ausweichen zu können und damit eine Kollision vermeiden zu können. Dies kann unter anderem dadurch erschwert werden, dass Drohnen herkömmlich meist derart konzipiert sind, dass die Fähigkeiten ihrer Sensorik und Steuerung an die Flugfähigkeiten der Drohne angepasst sind, d.h. die Sensorik und die Steuerung brauchen im Regelfall nur derart ausgelegt sein, dass die Drohne anhand der Sensorsignale stationäre Hindernisse ausreichend rechtzeitig erkennen kann, um mit ihren Flugfähigkeiten einen Flugweg um solche Hindernisse herum fliegen zu können und damit Kollisionen vermeiden zu können. Bei sich bewegenden, d.h. nicht-stationären Hindernissen, genügt eine solche Auslegung der Sensorik und der Steuerung jedoch im Allgemeinen nicht, um einen autonomen Flug ohne Kollisionen gewährleisten zu können.

Angesichts dieser Erkenntnislage wird hierin daher vorgeschlagen, die Drohne ihren Flugweg nicht lediglich basierend auf Signalen ihrer eigenen Sensorik ermitteln zu lassen. Stattdessen soll die Drohne zusätzliche Informationen empfangen können, die von der Aufzuganlage insbesondere von einer Aufzugsteuerung der Aufzuganlage bereitgestellt werden. Diese Informationen sollen als Aufzugschachtsegment-Informationen ein von der Aufzuganlage gewähltes Volumensegment angeben, in welchem die Drohne aktuell nicht fliegen soll und die daher als für die Drohne gesperrt bestimmt wird. Wie weiter unten für verschiedene Ausführungsformen detaillierter beschrieben, kann die Aufzuganlage solche Aufzugschachtsegment-Informationen auf verschiedene Weise generieren und an die Drohne übermitteln. Dabei kann sich die Aufzuganlage auf Informationen stützen, die beispielsweise in der Aufzugsteuerung der Aufzuganlage ohnehin bekannt sind. Beispielsweise liegen in der Aufzugsteuerung in der Regel Informationen darüber vor, an welcher Position sich die Aufzugkabine und/oder das Gegengewicht aktuell befinden und ob bzw. wie schnell diese bewegbaren Komponenten aktuell entlang des Aufzugschachts bewegt werden. Daraus kann die Drohne auch zusätzlich ableiteten, wo sich ein unten an der Aufzugkabine befestigtes so genanntes Hängekabel und ein gegebenenfalls vorhandenes so genanntes Ausgleichsseil befindet.

Unter Berücksichtigung der von der Aufzuganlage bereitgestellten Aufzugschachtsegment-Informationen kann die Drohne ihren zukünftigen Flugweg in relativ einfacher Weise derart ermitteln, dass das für sie gesperrte Volumensegment gemieden wird, sodass insbesondere Kollisionen mit Komponenten der Aufzuganlage in diesem Volumensegment verhindert werden können.

Das für die Drohne gesperrte Volumensegment kann auf verschiedene Weise ausgestaltet sein. Insbesondere kann das Volumensegment von der Aufzuganlage derart gewählt sein, dass sich darin Komponenten, insbesondere sich bewegende Komponenten, der Aufzuganlage befinden. Bei einer Wahl der Abmessungen des Volumensegments können verschiedene Parameter berücksichtigt werden. Beispielsweise können Abmessungen einer in dem Volumensegment befindlichen Aufzugkomponente, eine Geschwindigkeit, mit der sich diese Aufzugkomponente bewegt, und/oder Reaktionsgeschwindigkeiten sowie Flugfähigkeiten der Drohne berücksichtigt werden. Dementsprechend kann das Volumensegment ausreichend gross gewählt werden, um der Drohne ein rechtzeitiges Ausweichen und damit ein Vermeiden einer Kollision mit der in dem Volumensegment befindlichen Aufzugkomponente zu ermöglichen.

Insbesondere kann sich das Volumensegment über einen gesamten Querschnitt des Aufzugschachts erstrecken und einen Höhenabschnitt des Aufzugschachts umfassen, in dem sich die zu schützende Aufzugkomponente befindet. Eine solche Ausgestaltung des Volumensegments bewirkte faktisch, dass sich die Drohne ausschliesslich in einem Volumen unterhalb der Aufzugkomponente bzw. oberhalb der Aufzugkomponente, je nachdem wo sie sich anfänglich befindet, frei bewegen kann, aber nicht vertikal an der Aufzugkomponente vorbei bewegt werden kann. Alternativ kann das Volumensegment lediglich einen Teil des gesamten Querschnitts des Aufzugschachts ausfüllen, sodass die Drohne einen Flugweg durch ein benachbartes, nicht gesperrtes Volumensegment wählen kann, um vertikal an der Aufzugkomponente seitlich vorbei fliegen zu können. Beispielsweise kann das gesperrte Volumensegment lediglich einen Querschnitt aufweisen, der einem Querschnitt (= Fussabdruck) eines Verfahrwegs der Aufzugkabine oder eines Verfahrwegs des Gegengewichts entspricht, sodass die Drohne, je nachdem, ob sie der Aufzugkabine oder dem Gegengewicht ausweichen soll, durch ein jeweils benachbartes nicht-gesperrtes Volumen fliegen kann. Das gesperrte Volumensegment kann angesichts der typischerweise quaderförmigen Ausgestaltung des Aufzugschachts beispielsweise quaderförmig gewählt sein, wobei prinzipiell andere Volumenformen ebenfalls möglich sind. Es ist auch möglich, dass die Drohne in eine Nische in einer Wand der Aufzugschachts oder einen benachbarten Aufzugschacht ausweicht.

Gemäss einer Ausführungsform kann die Aufzugschachtsegment-Information von der Aufzuganlage basierend auf einer Ort-Bewegung-Information bereitgestellt werden, welche angibt, wo sich eine in dem Aufzugschacht verlagerbare Komponente der Aufzuganlage aktuell befindet und/oder wohin sich die in dem Aufzugschacht verlagerbare Komponente der Aufzuganlage aktuell bewegt.

Anders ausgedrückt kann die Aufzuganlage beim Bestimmen der Aufzugschachtsegment-Information Kenntnisse über eine aktuelle Position und/oder eine aktuelle Bewegungsrichtung und/oder eine aktuelle Bewegungsgeschwindigkeit der Aufzugkabine bzw. des Gegengewichts berücksichtigen. Informationen über diese aktuellen Betriebsparameter können in der Regel in einfacher Weise aus der Aufzugsteuerung ausgelesen werden. Indem die genannten Betriebsparameter beim Bestimmen der Aufzugschachtsegment-Information berücksichtigt werden, kann das damit angegebene für die Drohne gesperrte Volumensegment derart festgelegt werden, dass nur Teilvolumina des Aufzugschachts gesperrt werden, in denen tatsächlich eine Kollisionsgefahr mit dort befindlichen Aufzugkomponenten besteht. Die Aufzugschachtsegment-Information wird insbesondere direkt oder indirekt von der Aufzugsteuerung an die Drohne übermittelt.

Dabei kann beispielsweise ein Höhenabschnitt eines gesperrten Volumensegments umso grösser gewählt werden, je schneller sich die Aufzugkomponente bewegt. Ausserdem kann sich das gesperrte Volumensegment in einer ersten Richtung, in der sich die Aufzugkomponente bewegt, bis zu einer ersten Position erstrecken, und sich in einer zweiten, entgegengesetzten Richtung bis zu einer zweiten Position erstrecken, wobei die erste Position weiter von der aktuellen Position der Aufzugkomponente entfernt sein kann als die zweite Position. Anders ausgedrückt kann das gesperrte Volumensegment in der Richtung, in der sich die Aufzugkomponente aktuell bewegt, sich weiter über die aktuelle Position der Aufzugkomponente hinaus erstrecken als in der entgegengesetzten Richtung.

Unter Berücksichtigung einer derart bestimmten Aufzugschachtsegment-Information kann die Drohne dann ihren Flugweg derart ermitteln, dass Kollisionen mit der verlagerbaren Aufzugkomponente zuverlässig vermieden werden können.

Gemäss einer nicht von den Ansprüchen umfassten Ausführung kann die Aufzugschachtsegment-Information von der Aufzuganlage basierend auf einer Relativ-Information bereitgestellt werden, welche angibt, wo sich eine in dem Aufzugschacht verlagerbare Komponente der Aufzuganlage relativ zu der Drohne aktuell befindet und/oder wie sich die in dem Aufzugschacht verlagerbare Komponente der Aufzuganlage relativ zu der Drohne aktuell bewegt.

Mit anderen Worten kann beim Bestimmen der Aufzugschachtsegment-Information nicht nur die aktuelle absolute Position der verlagerbaren Aufzugkomponente und eventuell deren Bewegungsrichtung berücksichtigt werden, sondern auch deren relative Position und deren relative Bewegung bezogen auf die aktuelle Position bzw. Bewegung der Drohne. Beispielsweise kann das gesperrte Volumensegment in Fällen grösser gewählt werden, bei denen erkannt wird, dass sich die Aufzugkomponente und die Drohne bereits nahe beieinander befinden und sich aufeinander zu bewegen, als in Fällen, bei denen sich die Aufzugkomponente und die Drohne voneinander wegbewegen. Hierdurch kann ein Kollisionsrisiko weiter reduziert werden.

Gemäss einer nicht von den Ansprüchen umfassten Ausführung kann die Aufzugschachtsegment-Information von der Aufzuganlage unter Berücksichtigung einer Geschwindigkeit-Information bereitgestellt werden, wobei die Geschwindigkeit-Information angibt, mit welcher Geschwindigkeit sich eine in dem Aufzugschacht verlagerbare Komponente der Aufzuganlage aktuell durch den Aufzugschacht bewegt und/oder mit welcher Geschwindigkeit sich die Drohne maximal innerhalb des Aufzugschachts bewegen kann.

In dem ersten Fall, bei dem die Geschwindigkeit-Information die aktuelle Geschwindigkeit der verlagerbaren Aufzugkomponente angibt, kann die Aufzugschacht-Information beispielsweise ein umso grösseres Volumensegment als für die Drohne gesperrt bestimmen, je schneller sich die Aufzugkomponente bewegt.

Alternativ oder ergänzend hierzu kann in dem zweiten Fall beim Bestimmen des gesperrten Volumensegments berücksichtigt werden, wie schnell sich die Drohne maximal bewegen kann, d.h., über welche Flugfähigkeiten die Drohne verfügt, um der Aufzugkomponente gegebenenfalls ausweichen zu können. Je langsamer sich die Drohne bewegen kann, desto grösser sollte im Allgemeinen das für sie gesperrte Volumensegment sein, um gegebenenfalls einer auf sie zukommenden Aufzugkomponente noch ausweichen zu können.

Gemäss einer nicht von den Ansprüchen umfassten Ausführung kann die Aufzugschachtsegment-Information bereitgestellt werden, indem innerhalb des Volumensegments des Aufzugschachts, welches aktuell von der Aufzuganlage als für die Drohne gesperrt bestimmt wird, lokal ein anderes, von der Drohne empfangbares Signal generiert wird als ausserhalb dieses Volumensegments.

Anders ausgedrückt können die Aufzugschachtsegment-Informationen der Drohne in sehr einfacher Weise als lediglich eines von zwei möglichen Signalen bereitgestellt werden. Ein erstes Signal gibt dabei an, dass die Position, an der dieses erste Signal empfangen wird, innerhalb des gesperrten Volumensegments liegt, wohingegen ein zweites Signal angibt, dass diese Position ausserhalb des gesperrten Volumensegments liegt. Gegebenenfalls kann eines dieser beiden Signale auch als Null-Signal ausgebildet sein, d.h. als fehlendes Signal bzw. an der angegebenen Position nicht empfangbares Signal. Dementsprechend kann beispielsweise ein fehlender Empfang eines Signals der Drohne signalisieren, dass sie sich aktuell ausserhalb des für sie gesperrten Volumensegments befindet, wohingegen ein Empfangen eines Signals angibt, dass sie sich aktuell in einem gesperrte Volumensegment befindet und daher ihren Flugweg geeignet wählen muss, um das gesperrte Volumensegment zu verlassen.

Aufgrund einer derart einfach ausgestatteten Aufzugschachtsegment-Information können auch Sensoren, mithilfe derer diese Information empfangen werden soll, bzw. eine Auswertungslogik, mit der dieser Information ausgewertet werden soll, einfach gehalten werden.

Gemäss einer nicht von den Ansprüchen umfassten Ausführung kann in dem Aufzugschacht eine Vielzahl von Sendern angeordnet sein, wobei in verschiedenen Höhen entlang des Aufzugschachts jeweils einer der Sender angeordnet ist. Die Aufzugschachtsegment-Information kann dann bereitgestellt werden, indem an Sendern, welche sich innerhalb des Volumensegments des Aufzugschachts, welches aktuell von der Aufzuganlage als für die Drohne gesperrt bestimmt wird, befinden, ein anderes Signal emittiert wird als an Sendern ausserhalb dieses Volumensegments.

Mit anderen Worten kann die Aufzuganlage dazu konfiguriert sein, die Aufzugschachtsegment-Information mithilfe einer Vielzahl von Sendern zu erzeugen und an die Drohne zu übermitteln. Die Sender können hierbei entlang des Aufzugschachts in verschiedenen Höhen positioniert sein. Jeder der Sender kann ein Signal aussenden, das von der Drohne empfangen werden kann, wenn sie sich ausreichend nahe bei dem Sender befindet. Dabei kann jeder Sender dazu ausgelegt sein, zumindest zwei unterschiedliche Sendezustände einzunehmen, d.h. beispielsweise ein Signal auszusenden oder kein Signal auszusenden bzw. ein erstes Signal oder ein zweites Signal auszusenden. Je nach ausgesendetem Signal kann der Drohne signalisiert werden, dass sie sich bei Empfangen dieses Signals innerhalb bzw. ausserhalb des für sie gesperrten Volumensegments befindet.

Eventuell können die Sender auch mehrere verschiedene Signale emittieren. Dadurch kann beispielsweise der Drohne signalisiert werden, ob sie sich am Rande oder bereits weiter im Inneren eines gesperrten Volumenbereichs befindet. Ausserdem kann die Drohne eventuell durch Beobachten zeitlicher Veränderungen des von ihr empfangenen Signals erkennen, ob sie sich aktuell hin zu einem Zentrum des gesperrten Volumensegments oder weg von diesem Zentrum bewegt. Hieraus gewonnene ergänzende Informationen kann die Drohne nutzen, um ihren weiteren Flugweg geeignet festzulegen, um Kollisionen mit Aufzugkomponenten in dem gesperrten Volumensegment zu verhindern.

Die Sender können beliebige Arten von Signalen aussenden, die von der Drohne empfangen werden können. Beispielsweise können Sender elektromagnetische Signale, Lichtsignale, Schallsignale oder Ähnliches aussenden. Die Sender können mit einer Aufzugsteuerung der Aufzuganlage korrespondieren und von dieser zum Emittieren der Signale angesteuert werden.

Erfindungsgemäss ist an einer in dem Aufzugschacht verlagerbaren Komponente der Aufzuganlage zumindest ein Sender angeordnet. Dabei wird die Aufzugschachtsegment-Information bereitgestellt, indem mit dem Sender ein Signal ausgesendet wird, welches abhängig von einem Abstand von der verlagerbaren Komponente abnimmt.

Anders ausgedrückt wird die Aufzugschachtsegment-Information von der Aufzuganlage mithilfe eines Senders bereitgestellt, der sich an der Aufzugkabine oder dem Gegengewicht befindet und sich mit dieser verlagerbaren Komponente mitbewegt. Der Sender sollte hierbei dazu konfiguriert sein, ein Signal auszusenden, welches abhängig von einem Abstand von dem Sensor stark abnimmt. Das von dem Sender emittierte Signal kann von der Drohne empfangen werden. Dabei auftretende abstandsabhängige Signalvariationen, insbesondere die mit zunehmendem Abstand von dem Sensor abnehmenden Signalintensitäten, können von der Drohne erkannt werden. Die Drohne kann daraufhin durch Analysieren der Signale erkennen, ob sie sich innerhalb oder ausserhalb eines gesperrten Volumensegments befindet. Gegebenenfalls kann die Drohne auch durch Analysieren von Signalvariationen erkennen, ob sich ein Abstand zwischen ihr und dem Sender aktuell verringert oder vergrössert und daraufhin ihren Flugweg geeignet anpassen, um Kollisionen mit der verlagerbaren Aufzugkomponente zu verhindern.

Der Sender kann beliebige Signale aussenden, die von der Drohne empfangen werden können. Wichtig ist hierbei, dass die Signale sich mit zunehmendem Abstand von dem Sender ausreichend stark abnehmen, sodass dies von einem in der Drohne vorgesehen Sensor bzw. Empfänger erkannt werden kann und darauf basierend eine Information über den aktuellen Abstand zu dem Sender ermittelt werden kann. Die Signale können beispielsweise elektromagnetische Signale, Lichtsignale, Schallsignale oder Ähnliches sein. Die Signale können derart emittiert werden, dass sich ihre Intensität proportional zu einem Abstand zu dem Sender, beispielsweise linear mit dem Abstand, quadratisch mit dem Abstand oder kubisch mit dem Abstand verringern.

Gemäss einer konkretisierten Ausführungsform kann die Aufzugschachtsegment-Information bereitgestellt werden, indem mit dem Sender in eine Richtung, in die sich die verlagerbare Komponente aktuell bewegt, ein anderes Signal ausgesendet wird, als in eine entgegengesetzte Richtung.

Beispielsweise kann der Sender ein Signal, dass in der aktuellen Bewegungsrichtung der Aufzugkabine bzw. des Gegengewichts emittiert wird, mit einer anderen Frequenz, einer anderen Farbe, einer anderen Tonlage, etc. aussenden als in einer entgegengesetzten Richtung. Die Drohne kann daraufhin erkennen, ob die bewegte Aufzugkomponente auf sie zukommt oder sich von ihr entfernt und dementsprechend geeignet ihren Flugweg anpassen bzw. Ausweichmanöver planen.

Möglicherweise können an der verlagerbaren Aufzugkomponente mehrere Sender angebracht sein. Beispielsweise kann ein erster Sender an einer nach oben gerichteten Oberfläche der Aufzugkomponente, d.h. beispielsweise einem Dach der Aufzugkabine, angeordnet sein und dazu ausgelegt sein, Signale nach oben auszusenden. Ein zweiter Sender kann an einer nach unten gerichteten Oberfläche der Aufzugkomponente, d.h. beispielsweise an einem Boden der Aufzugkabine, angeordnet sein und dazu ausgelegt sein, Signale nach unten auszusenden. Je nach augenblicklicher Bewegungsrichtung der Aufzugkomponente können die beiden Sender unterschiedliche Signale emittieren.

Die Aufzugschachtsegment-Information wird insbesondere nur bereitgestellt, wenn sich die verlagerbare Komponente, also die Aufzugkabine und das Gegengewicht bewegt. Damit kann ein unnötiges Aussenden der Aufzugschachtsegment-Information vermieden werden. Wenn die verlagerbare Komponente stillsteht, sich also nicht bewegt, kann die Drohne auf Basis der Sensorsignale ihrer eigenen Sensorik eine Kollision mit der verlagerbaren Komponente vermeiden.

Gemäss einer nicht von den Ansprüchen umfassten Ausführung kann die Aufzugschachtsegment-Information von der Aufzuganlage als Komponenten-Ort-Bewegung-Information bereitgestellt werden, welche angibt, wo sich eine in dem Aufzugschacht verlagerbare Komponente der Aufzuganlage aktuell befindet und/oder wohin sich die in dem Aufzugschacht verlagerbare Komponente der Aufzuganlage aktuell bewegt. Die Drohne kann dann den Flugweg unter Berücksichtigung sowohl der empfangenen Komponenten-Ort-Bewegung-Information als auch einer Drohnen-Ort-Bewegung-Information ermitteln, welche angibt, wo sich die Drohne in dem Aufzugschacht aktuell befindet und/oder wohin sich die Drohne in dem Aufzugschacht aktuell bewegt.

Anders ausgedrückt kann die Aufzugschachtsegment-Information konkrete Angaben darüber enthalten, wo sich die Aufzugkabine bzw. das Gegengewicht aktuell befindet und in welche Richtung es sich gegebenenfalls aktuell bewegt. Diese Komponenten-Ort-Bewegung-Information kann der Drohne drahtlos übermittelt werden. Beispielsweise kann diese Information direkt von der Aufzugsteuerung über ein sich in dem Aufzugschacht ausbreitendes drahtloses Netzwerk übermittelt werden. Alternativ kann die genannte Information von der Aufzugsteuerung zunächst an eine sich ausserhalb der Aufzuganlage befindliche Instanz wie beispielsweise ein Überwachungszentrum oder eine Datenwolke (Cloud) übermittelt werden, von wo aus sie dann an die Drohne weitergeleitet wird. Die Drohne kann hierzu beispielsweise über einen Internetzugang verfügen.

Zusätzlich zu der Komponenten-Ort-Bewegung-Information betreffend die Aufzugkomponente kann die Drohne in diesem Fall auch über eine Drohnen-Ort-Bewegung-Information verfügen, welche angibt, wo sich die Drohne aktuell befindet und wohin sie sich aktuell bewegt. Unter Berücksichtigung sowohl der Komponenten-Ort-Bewegung-Information als auch der Drohnen-Ort-Bewegung-Information kann die Drohne dann das für sie gesperrte Volumensegment innerhalb des Aufzugschachts ermitteln. Dabei kann die Drohne gegebenenfalls ihre eigenen Reaktionsfähigkeiten und/oder Flugfähigkeiten berücksichtigen, um einen zukünftigen Flugweg derart ermitteln zu können, dass Kollisionen vermieden werden.

Die vorangehend beschriebenen Ansätze zum Bereitstellen, Übermitteln und/oder Empfangen der Aufzugschachtsegment-Information können einzeln implementiert oder kombiniert werden.

Es wird darauf hingewiesen, dass Ausführungsformen der Erfindung hierin teilweise mit Bezug auf ein Verfahren zum Steuern einer flugfähigen Drohne und teilweise mit Bezug auf eine entsprechend ausgestaltete Aufzuganlageninspektionsanordnung beschrieben sind. Fachleute können erkennen, dass die beschriebenen Ausgestaltungen in geeigneter Weise modifiziert und/oder auf andere Ausführungsformen der Erfindung übertragen und angepasst werden können, um zu weiteren Ausführungsformen der Erfindung zu gelangen.

Es wäre auch möglich, dass die Drohne einen möglichen Bewegungsraum der Aufzugkabine der Aufzuganlage eingeschränkt.

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

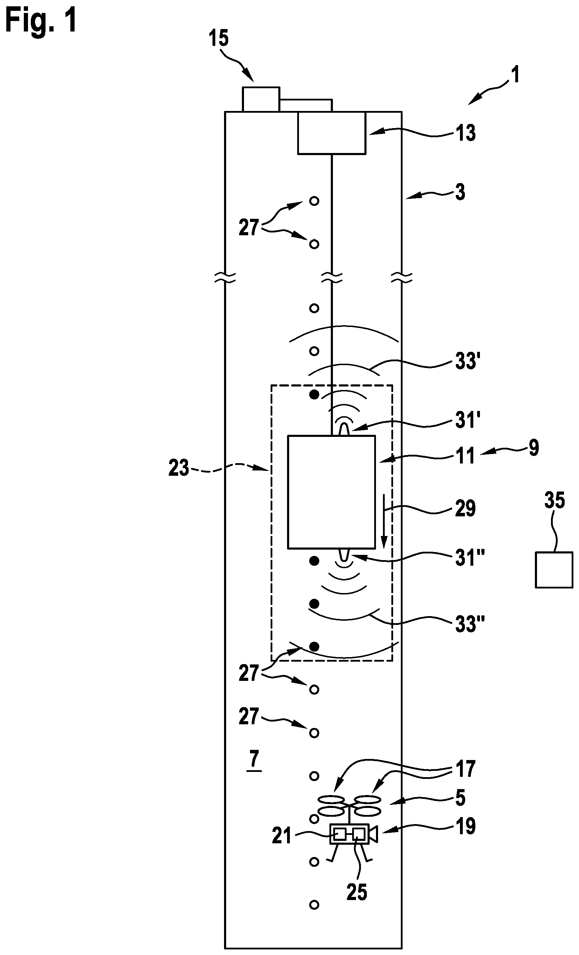

Fig. 1 zeigt eine Aufzuganlageninspektionsanordnung gemäss einer Ausführungsform der vorliegenden Erfindung.

Die Figur ist lediglich schematisch und nicht massstabsgetreu. Gleiche Bezugszeichen bezeichnen gleiche oder gleichwirkende Merkmale.

Fig. 1 zeigt eine Aufzuganlageninspektionsanordnung 1 mit einer Aufzuganlage 3 und einer flugfähigen Drohne 5.

Die Aufzuganlage 3 umfasst einen Aufzugschacht 7. In dem Aufzugschacht 7 kann sich eine verlagerbare Komponente 9 in Form einer Aufzugkabine 11 bewegen. Die Aufzugkabine 11 wird dabei von einem Antrieb 13 verlagert. Ein Betrieb des Antriebs 13 wird von einer Aufzugsteuerung 15 gesteuert. Obwohl im dargestellten Beispiel aus Übersichtlichkeitsgründen nicht dargestellt, kann die Aufzuganlage 3 ferner über eine weitere verlagerbare Komponente 9 in Form eines Gegengewichts verfügen.

Die Drohne 5 ist im dargestellten Beispiel als Quadrokopter ausgebildet. Sie verfügt über vier separat voneinander ansteuerbare Propeller 17. Ein insgesamt von den Propellern 17 erzeugter Schub kann aufgrund unterschiedlich angesteuerter Rotationsgeschwindigkeiten der Propeller 17 in verschiedene Richtungen gelenkt werden, sodass die Drohne 5 in beliebige Richtungen sowohl vertikal als auch horizontal geflogen werden kann. Die Drohne 5 ist mit zumindest einem Inspektionssensor 19 ausgestattet. Mithilfe dieses Inspektionssensors 19 kann die Drohne den Aufzugschacht 7 inspizieren. Beispielsweise kann der Inspektionssensor 19 als Kamera ausgebildet sein. Ferner verfügt die Drohne 5 über eine integrierte Sensorik 21. Diese integrierte Sensorik 21 ist dazu konfiguriert, Signale zu empfangen, mittels derer die Aufzuganlage 3 Aufzugschachtsegment-Informationen bereitstellt.

Die Aufzuganlage 3 ist dazu konfiguriert, die Aufzugschachtsegment-Information zu erzeugen und diese dann derart in dem Aufzugschacht 7 bereitzustellen, dass diese von der Drohne 5 empfangen werden kann. Die Aufzugschachtsegment-Information gibt dabei an, welches Volumensegment 23 des Aufzugschachts 7 aktuell von der Aufzuganlage 3 für die Drohne 5 als gesperrt bestimmt wird.

Dabei kann bei einer nicht von den Ansprüchen umfassten Ausführung bei der Erzeugung der Aufzugschachtsegment-Information berücksichtigt werden, an welcher Position innerhalb des Aufzugschachts 7 sich die Aufzugkabine 11 aktuell befindet und in welche Richtung und mit welcher Geschwindigkeit sich die Aufzugkabine 11 aktuell bewegt. Entsprechende Komponenten-Ort-Bewegung-Informationen können der Aufzuganlage 3 von der Aufzugsteuerung 15 zur Verfügung gestellt werden.

Ergänzend können der Aufzuganlage 3 Informationen über die Drohne 5 vorliegen. Beispielsweise kann die Aufzuganlage 3 darüber informiert sein, über welche Flugfähigkeiten die Drohne 5 verfügt, d.h. zum Beispiel, mit welcher Geschwindigkeit sich die Drohne 5 maximal innerhalb des Aufzugschachts 7 bewegen kann. Dementsprechend kann die Aufzuganlage 3 bei einer nicht von den Ansprüchen umfassten Ausführung beim Bestimmen des für die Drohne 5 gesperrten Volumensegments 23 berücksichtigen, wie schnell die Drohne 5 aufgrund ihrer Flugfähigkeiten beispielsweise der sich nähernden Aufzugkabine 11 ausweichen kann.

Ausserdem kann vorgesehen sein, dass die Drohne 5 aktiv Informationen an die Aufzuganlage 3 übermittelt. Beispielsweise kann die Drohne 5 die Aufzuganlage 3 darüber informieren, wo sie sich aktuell innerhalb des Aufzugschachts 7 befindet und in welche Richtung und mit welcher Geschwindigkeit sie aktuell fliegt. Solche Drohnen-Ort-Bewegung-Informationen kann die Aufzuganlage 3 bei einer nicht von den Ansprüchen umfassten Ausführung ebenfalls beim Bestimmen des für die Drohne 5 zu sperrenden Volumensegments 23 berücksichtigen. Dementsprechend kann die Aufzugschachtsegment-Information bei einer nicht von den Ansprüchen umfassten Ausführung basierend auf einer Relativ-Information bereitgestellt werden, welche angibt, wo sich die Aufzugkabine 11 relativ zu der Drohne 5 aktuell befindet und/oder wie sich die Aufzugkabine 11 und die Drohne 5 aktuell relativ zueinander bewegen.

Während die Drohne 5 im Rahmen einer Inspektion der Aufzuganlage 3 durch den Aufzugschacht 7 fliegt, kann sie kontinuierlich die von der Aufzuganlage 3 bereitgestellten Aufzugschachtsegment-Informationen empfangen. Diese können dann in einer Drohnensteuerung 25 ausgewertet werden. Die Drohnensteuerung 25 kann dann unter Berücksichtigung der Aufzugschachtsegment-Informationen automatisiert einen Flugweg ermitteln, bei dem die Drohne 5 sich ausschliesslich ausserhalb des gesperrten Volumensegments 23 bewegt. Auf diese Weise kann eine Kollision mit der sich innerhalb des gesperrten Volumensegments 23 befindlichen Aufzugkabine 11 vermieden werden.

Bei dem in der Figur dargestellten Ausführungsbeispiel sind drei Technologien veranschaulicht, mithilfe derer die Aufzuganlage 3 die Aufzugschachtsegment-Information bereitstellen kann. Die drei Technologien können kombiniert oder einzeln implementiert werden.

Bei einer ersten nicht von den Ansprüchen umfassten Technologie werden vertikal entlang des Aufzugschachts 7 viele Sender 27 angeordnet. Die Sender 27 können gleichmässig verteilt entlang der gesamten Höhe des Aufzugschachts 7 beispielsweise an einer Wand des Aufzugschachts 7 angebracht sein. Zum Beispiel können die Sender 27 in gleichmässigen Abständen angeordnet sein, zum Beispiel jeweils mit 1 m Zwischenabstand. Jeder der Sender 27 kann ein Signal in seine unmittelbare Umgebung emittieren. Dabei kann der Sender 27 zumindest zwischen zwei Signalzuständen variieren. Ein Signalzustand (in der Figur als ausgefüllter Kreis dargestellt) soll dabei angeben, dass die Position des Senders 27 bzw. der von diesem ausgesendeten Signale sich innerhalb des gesperrten Volumensegments 23 befindet. Ein anderer Signalzustand (in der Figur als leerer Kreis dargestellt) gibt an, dass sich die Position des Senders 27 bzw. der ausgesendeten Signale ausserhalb des gesperrten Volumensegments 23 befindet.

Die Sender 27 bzw. deren Signalzustände können von der Aufzugsteuerung 15 aktiviert bzw. geschaltet werden. Sender 27, die sich aktuell in der Nähe der Aufzugkabine 11 befinden, können dabei in den Signalzustand geschaltet werden, der das gesperrte Volumensegment 23 angibt, wohingegen weiter entfernte Sender 27 in den anderen Signalzustand geschaltet werden können.

Dabei kann auch berücksichtigt werden, in welche Bewegungsrichtung 29 die Aufzugkabine 11 sich aktuell bewegt. In dieser Bewegungsrichtung 29 kann ein sich vertikal über die Aufzugkabine 11 hinaus reichender Teil des gesperrten Volumensegments 23 grösser gewählt werden als in der entgegengesetzten Richtung und dementsprechend weitere der Sender 27 in den entsprechenden Signalzustand geschaltet werden. Dadurch kann der Drohne 5 ausreichend früh signalisiert werden, dass sie sich in das gesperrte Volumensegment 23 rund um die sich nähernde Aufzugkabine 11 bewegt bzw. sich dieser nähert, sodass die Drohne 5 rechtzeitig ein Ausweichmanöver einleiten kann. Die Drohne 5 kann dabei in einen Bereich neben dem gesperrten Volumenelement 23, also neben der Aufzugkabine 11 ausweichen. Es ist aber auch möglich, dass die Drohne 5 in eine nicht dargestellte Nische in einer Wand des Aufzugschachts 7 oder in einen nicht dargestellten, neben dem Aufzugschacht 7 angeordneten Aufzugschacht ausweicht.

Bei einer zweiten Technologie sind Sender 31', 31" direkt an der Aufzugkabine 11 angebracht, sodass diese Sender 31', 31" sich mit der Aufzugkabine 11 mitbewegen. Die Sender 31', 31" emittieren Signale 33', 33", deren Intensität abhängig vom vertikalen Abstand von der Aufzugkabine 11 sukzessive abnimmt. Auf diese Weise kann die Aufzuganlage 3 ein für die Drohne 5 gesperrtes Volumensegment 23 als Aufzugschachtsegment-Information bereitstellen. Die Sender 31', 31" emittieren die Signale 33', 33" insbesondere nur dann, wenn sich die Aufzugkabine 11 bewegt. Wenn die Aufzugkabine 11 stillsteht, werden dann keine Signale 33', 33" emittiert. Die Drohne 5, die die von den Sendern 31', 31" emittierten Signale 33', 33" empfängt, kann dabei anhand der Intensität der Signale 33', 33" erkennen, ob sie sich noch ausreichend weit entfernt von der Aufzugkabine 11 befindet oder ob Signale oberhalb eines vorbestimmten Intensitätsgrenzwerts empfangen werden, die angeben, dass die Drohne 5 in das gesperrte Volumensegment 23 einzudringen droht und somit ein Ausweichmanöver einleiten muss.

Dabei können die Sender 31', 31" in entgegengesetzte Richtungen unterschiedliche Signale 33', 33" emittieren. Im dargestellten Beispiel ist dabei auf einer Oberseite der Aufzugkabine 11 ein Sender 31' vorgesehen, der Signale 33' vertikal nach oben emittiert, wohingegen an einer Unterseite der Aufzugkabine 11 ein Sender 31" vorgesehen ist, dessen Signale 33" nach vertikal unten emittiert werden. Da die beiden Signale 33', 33" unterschiedlich sind, kann die Drohne 5 durch Analyse der Signale 33', 33" erkennen, ob sie sich oberhalb oder unterhalb der Aufzugkabine 11 befindet.

Ausserdem können die beiden Signale 33', 33" mit unterschiedlichen Intensitäten emittiert werden, je nachdem in welche Bewegungsrichtung 29 sich die Aufzugkabine 11 aktuell bewegt. Entlang der Bewegungsrichtung 29 können die Signale 33" dabei mit höherer Intensität emittiert werden als die Signale 33' in entgegengesetzter Richtung. Die Drohne 5 kann daher rechtzeitig vor der sich in der Bewegungsrichtung 29 bewegenden Aufzugkabine 11 gewarnt werden.

In einer einfachen Ausgestaltung können die beiden Sender 31', 31" als einfache Lichtquellen vorgesehen sein. Beispielsweise kann der an der Oberseite der Aufzugkabine 11 vorgesehenen Sender 31' als grüne Lichtquelle und der an der Unterseite vorgesehene Sender 31' als rote Lichtquelle ausgebildet sein. Die Drohne 5 kann in ihrer Sensorik 21 über farbempfindliche und intensitätsempfindliche Lichtsensoren verfügen und somit durch Analyse des von den Sendern 31', 31" emittierten Lichts erkennen, ob sich die Aufzugkabine 11 auf die Drohne 5 zu bewegt oder wegbewegt und wann spätestens ein Ausweichmanöver eingeleitet werden soll.

Als dritte nicht von den Ansprüchen umfasste Technologie kann die Aufzuganlage 3 die Aufzugschachtsegment-Information in Form einer Komponenten-Ort-Bewegung-Information bereitstellen, die angibt, wo und/wohin sich die Aufzugkabine 11 aktuell bewegt. Diese Komponenten-Ort-Bewegung-Information kann der Drohne 5 beispielsweise mithilfe eines Funksignals direkt übermittelt werden. Alternativ kann die Aufzugsteuerung 15 diese Information einer externen Apparatur 35 wie zum Beispiel einem Server in einem Aufzugkontrollzentrum oder einer Datenwolke übermitteln, von wo aus die Information dann wiederum von der Drohne 5 abgerufen werden kann. Um das für sie gesperrte Volumensegment 23 ermitteln zu können, berücksichtigt die Drohne 5 in diesem Fall ergänzend eine ihr vorliegende Drohnen-Ort-Bewegung-Information, welche angibt, wo sich die Drohne 5 aktuell im Aufzugschachts 7 befindet und/oder wohin sie sich aktuell bewegt. Diese Informationen kann die Drohne 5 beispielsweise mithilfe ihrer eigenen Sensorik 21 und/oder mithilfe des Inspektionssensors 19 ermitteln. Basierend auf den beiden Ort-Bewegung-Informationen kann die Drohne 5 dann erkennen, wenn sie sich relativ nahe zu der Position der Aufzugkabine 11 befindet und/oder sich die Drohne 5 und die Aufzugkabine 11 relativ zueinander aufeinander zu bewegen. Dementsprechend kann die Drohne 5 geeignete Ausweichmanöver einleiten.

Als Ausweichmanöver sind verschiedene Strategien möglich. Zum Beispiel kann die Drohne 5 als Ausweichmanöver eine Flucht in eine geeignete Richtung, d.h. nach oben oder nach unten, einleiten, um vor einer sich nähernden Aufzugkomponente 9 zu "flüchten". Wenn das gesperrte Volumensegment 23 nicht den gesamten Querschnitt des Aufzugschachts 7 ausfüllt, kann die Drohne 5 der sich nähernden Aufzugkomponente 9 ausweichen, indem sie ihren Flugweg horizontal verlagert und dann seitlich an dem gesperrten Volumensegment 23 vorbeifliegt. Alternativ können in dem Aufzugschacht 7 Ausnehmungen vorgesehen sein, in welche sich die Drohne 5 bei einer sich nähernden Aufzugkomponente 9 "flüchten" kann und dort verharren kann, bis die Aufzugkomponente 9 sich an der Drohne 5 vorbei bewegt hat. Als weitere Alternative kann eine Aufzuganlage 3 über mehrere nebeneinander angeordnete Aufzugschächte 7 verfügen, in denen sich mehrere verlagerbare Aufzugkomponenten 9 bewegen. In diesem Fall kann die Drohne 5 einer sich nähernden Aufzugkomponente 9 durch temporäres Ausweichen in einen benachbarten Aufzugschacht 7 aus dem Weg gehen.

Abschliessend wird darauf hingewiesen, dass Begriffe wie "aufweisend", "umfassend" etc. keine anderen Elemente oder Schritte ausschliessen und Begriffe wie "eine" oder "ein" keine Vielzahl ausschliessen. Ferner wird darauf hingewiesen, dass Merkmale oder Schritte, die mit Verweis auf eines der obigen Ausführungsbeispiele beschrieben worden sind, im Schutzumfang der beigefügten Ansprüche auch in Kombination mit anderen Merkmalen oder Schritten anderer der obigen Ausführungsbeispiele verwendet werden können. Bezugszeichen in den Ansprüchen sind nicht als Einschränkung anzusehen.

## Patentansprüche

1. Verfahren zum Steuern einer flugfähigen Drohne (5) in einem Aufzugschacht (7) einer Aufzuganlage (3), aufweisend:
Empfangen einer von der Aufzuganlage (3) bereitgestellten Aufzugschachtsegment-Information, welche angibt, welches Volumensegment (23) des Aufzugschachts (7) aktuell von der Aufzuganlage (3) als für die Drohne (5) gesperrt bestimmt wird; und
Steuern der Drohne (5) entlang eines von der Drohne (5) automatisiert ermittelten Flugwegs, wobei die Drohne (5) den Flugweg derart ermittelt, dass sich die Drohne (5) ausschliesslich ausserhalb des für die Drohne (5) als gesperrt bestimmten Volumensegments (23) bewegt, wobei die Drohne (5) den Flugweg unter Berücksichtigung der empfangenen Aufzugschachtsegment-Information ermittelt,. **dadurch gekennzeichnet, dass**
an einer in dem Aufzugschacht (7) verlagerbaren Komponente (9) der Aufzuganlage (3) zumindest ein Sender (31', 31") angeordnet ist und
die Aufzugschachtsegment-Information bereitgestellt wird, indem mit dem Sender (31', 31") ein Signal (33) ausgesendet wird, welches abhängig von einem Abstand von der verlagerbaren Komponente (9) abnimmt.

2. Verfahren nach Anspruch 1,
wobei die Aufzugschachtsegment-Information bereitgestellt wird, indem mit dem Sender (31', 31") in eine Richtung (29), in die sich die verlagerbare Komponente (9) aktuell bewegt, ein anderes Signal (33) ausgesendet wird, als in eine entgegengesetzte Richtung.

3. Verfahren nach Anspruch 1 oder 2,
wobei die Aufzugschachtsegment-Information nur bereitgestellt wird, wenn sich die verlagerbare Komponente (9) bewegt.

4. Aufzuganlageninspektionsanordnung (1), aufweisend:
eine Aufzuganlage (3) mit einem Aufzugschacht (7), wenigstens einer in dem Aufzugschacht (7) verlagerbaren Komponente (9), einem Antrieb (13) zum Verlagern der verlagerbaren Komponente (9) und einer Aufzugsteuerung (15) zum Steuern von Verlagerungsbewegungen der verlagerbaren Komponente (9), und eine flugfähige Drohne (5),
**dadurch gekennzeichnet, dass**
in der Aufzuganlage (3) an einer in dem Aufzugschacht (7) verlagerbaren Komponente (9) der Aufzuganlage (3) zumindest ein Sender (31', 31") angeordnet ist, und die Aufzuganlageninspektionsanordnung (1) dazu konfiguriert ist, das Verfahren gemäss einem der Ansprüche 1 bis 3 auszuführen oder zu kontrollieren.

## Claims

1. A method for controlling an airborne drone (5) in an elevator shaft (7) of an elevator system (3), comprising:
receiving elevator shaft segment information provided by the elevator system (3), which indicates which volume segment (23) of the elevator shaft (7) is currently determined by the elevator system (3) to be off-limits to the drone (5); and
controlling the drone (5) along a flight path automatically determined flight path, wherein the drone (5) determines the flight path such that the drone (5) moves exclusively outside the volume segment (23) designated as off-limits to the drone (5), wherein the drone (5) determines the flight path taking into account the received elevator shaft segment information,.
**characterized in that**
at least one transmitter (31', 31") is arranged on a component (9) of the elevator system (3) that is movable within the elevator shaft (7), and
the elevator shaft segment information is provided by transmitting a signal (33) via the transmitter (31', 31"), which signal decreases as the distance from the movable component (9) increases.

2. A method according to claim 1,
wherein the elevator shaft segment information is provided by the transmitter (31', 31") transmitting a different signal (33) in a direction (29) in which the movable component (9) is currently moving than in the opposite direction.

3. A method according to claim 1 or 2,
wherein the elevator shaft segment information is provided only when the movable component (9) is moving.

4. Elevator inspection assembly (1), comprising:
an elevator system (3) comprising an elevator shaft (7), at least one movable component (9) within the elevator shaft (7), a drive (13) for moving the movable component (9), and an elevator control system (15) for controlling the movements of the movable component (9), and
an airborne drone (5),
**characterized in that**
at least one transmitter (31', 31") is arranged in the elevator system (3) on a component (9) of the elevator system (3) that is movable within the elevator shaft (7), and the elevator system inspection assembly (1) is configured to perform or monitor the method according to one of claims 1 through 3.

## Revendications

1. Procédé de commande d'un drone capable de voler (5) dans une cage d'ascenseur (7) d'une installation d'ascenseur (3), comprenant :
la réception d'informations sur les segments de la cage d'ascenseur fournies par l'installation d'ascenseur (3), lesquelles indiquent quel segment volumique (23) de la cage d'ascenseur (7) est actuellement déterminé par l'installation d'ascenseur (3) comme étant interdit d'accès au drone (5) ; et
le pilotage du drone (5) le long d'une trajectoire de vol déterminée automatiquement par le drone (5) déterminée de manière automatisée, le drone (5) déterminant cette trajectoire de vol de telle sorte qu'il se déplace exclusivement à l'extérieur du segment volumique (23) désigné comme interdit au drone (5), le drone (5) déterminant ladite trajectoire de vol en tenant compte des informations relatives aux segments de la cage d'ascenseur reçues,.
**caractérisé en ce que**
au moins un émetteur (31', 31") est disposé sur un composant (9) de l'installation d'ascenseur (3) pouvant être déplacé dans la cage d'ascenseur (7) et
les informations relatives aux segments de la cage d'ascenseur sont fournies par l'émission, à l'aide de l'émetteur (31', 31"), d'un signal (33) dont l'intensité diminue en fonction de la distance par rapport au composant mobile (9).

2. Procédé selon la revendication 1,
dans lequel les informations relatives aux segments de la cage d'ascenseur sont fournies en émettant, à l'aide de l'émetteur (31', 31"), un signal (33) différent selon que le composant mobile (9) se déplace dans une direction (29) ou dans la direction opposée.

3. Procédé selon la revendication 1 ou 2,
dans lequel les informations relatives aux segments de la cage d'ascenseur ne sont fournies que lorsque le composant mobile (9) est en mouvement.

4. Dispositif d'inspection d'ascenseur (1), comprenant :
une installation d'ascenseur (3) comprenant une cage d'ascenseur (7), au moins un composant (9) pouvant se déplacer dans la cage d'ascenseur (7), un entraînement (13) destiné à déplacer le composant mobile (9) et une commande d'ascenseur (15) destinée à commander les mouvements de déplacement du composant mobile (9), et
un drone capable de voler (5),
**caractérisé en ce que**
au moins un émetteur (31', 31") est disposé dans l'installation d'ascenseur (3) sur un composant (9) de celle-ci pouvant être déplacé dans la cage d'ascenseur (7), et le dispositif d'inspection d'installation d'ascenseur (1) est configuré pour exécuter ou contrôler le procédé selon l'une des revendications 1 à 3.
